(19)

(11) **EP 2 796 806 B1**

(12) **EUROPEAN PATENT SPECIFICATION**


(45) Date of publication and mention of the grant of the patent:
**24.06.2020 Bulletin 2020/26**

(21) Application number: **12860174.7**

(22) Date of filing: **05.12.2012**

(51) Int Cl.:
***F24H 9/00*** *(2006.01)* ***C02F 1/00*** *(2006.01)*
***C02F 1/28*** *(2006.01)* ***F24H 1/00*** *(2006.01)*
***F28F 19/01*** *(2006.01)*

(86) International application number:
**PCT/JP2012/081527**

(87) International publication number:
**WO 2013/094410 (27.06.2013 Gazette 2013/26)**


(54) **HOT-WATER SUPPLY DEVICE**

HEISSWASSERVERSORGUNGSVORRICHTUNG

DISPOSITIF D'ALIMENTATION EN EAU CHAUDE


(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.12.2011 JP 2011278505**

(43) Date of publication of application:
**29.10.2014 Bulletin 2014/44**



(73) Proprietor: **Mitsubishi Electric Corporation**
**Tokyo 100-8310 (JP)**

(72) Inventors:
- **NODA, Seiji**
  **Tokyo 100-8310 (JP)**
- **FURUKAWA, Seiji**
  **Tokyo 100-8310 (JP)**

(74) Representative: **Sajda, Wolf E. et al**
**Meissner Bolte Patentanwälte**
**Rechtsanwälte Partnerschaft mbB**
**Postfach 86 06 24**
**81633 München (DE)**



(56) References cited:
**EP-A1- 1 484 289**
**JP-A- H05 245 497**
**JP-A- 2001 129 593**
**JP-A- 2002 001 326**
**JP-A- 2005 279 406**
**JP-A- 2005 351 600**
**JP-A- 2006 095 426**
**JP-A- 2006 317 069**
**JP-A- 2007 093 082**
**JP-A- 2008 274 421**
**JP-A- 2010 091 179**
**JP-A- 2010 261 651**
**JP-A- 2011 226 697**
**JP-U- S5 044 758**
**JP-U- S6 422 194**



Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



EP 2 796 806 B1

## Description

### Technical Field

The present invention relates to a hot-water supply device that includes a mechanism of suppressing an adhesion of scaled particles within a heat exchanger.

### Background Art

Hot-water supply devices that supply hot water to a bathroom or a kitchen are roughly classified into electric hot-water supply devices, gas hot-water supply devices, petroleum hot-water supply devices and the like, all including a portion called a heat exchanger that transfers heat to water. Recently, among such hot-water supply devices, heat-pump type heat exchanging electric hot-water supply devices (heat pump hot-water supply devices) are getting attention in view of energy saving and reduction of carbon dioxide as global warming countermeasure.

Heat pump hot-water supply devices have a principle to transfer heat of atmosphere to a heat medium, thereby bringing water to the boil by such heat. More specifically, high heat generated when atmosphere is compressed is transferred to water through the heat exchanger, the temperature of the heat medium is returned to the temperature of the atmosphere by cool air when the atmosphere is expanded, and such cycles are repeated (cold heat cycles).

Theoretically, it is difficult to take out thermal energy equal to or larger than the loaded energy, but the heat pump hot-water supply devices employ a mechanism of utilizing heat of atmosphere, and thus such devices can utilize larger thermal energy than energy necessary for operation.

It is very important for the heat exchanger in the heat pump hot-water supply devices to maintain a heat transfer surface always clean in order to transfer heat to water. When a wall of the heat transfer surface becomes tainted, an effective heat transfer area is reduced, resulting in a deterioration of a heat transfer performance. When the taint is further deposited, a pressure loss caused when water flow in the heat exchanger increase, which may block off the flow channel in the worst case.

In areas where water contains, in particular, large hardness components (for example, calcium ions, magnesium ions, ionic silica, molecular silica or the like), mineral compound salt with a low solubility which is so-called scales (scaled particles) are precipitated by heating, and adhere inside the heat exchanger.

As a mechanism of the adhesion of the hardness components in water as the scales inside the heat exchanger, nuclei of calcium carbonate are produced on a high-temperature surface like the heat transfer surface of the heat exchanger, and the crystalline growth of the scales advances.

Hence, when water in the tank of hot-water supply devices is heated while being caused to circulate through the heat exchanger by a pump, nuclei of calcium carbonate or particles produced in hot water heated by the heat exchanger are introduced again, and may adhere to the heat transfer surface.

Patent Literature 1 discloses a method of separating the above-explained scaled particles from water. Such a method is an aqueous scale adhesion preventing method that allows process-target water to flow through a column filled with solid particles containing calcium silicate. More specifically, this patent literature discloses that when tobermorite (particle diameter: 20 μm), xonotlite (particle diameter: 5 μm), amorphous calcium silicate (particle diameter: 45 μm), polyacrylic acid (molecular weight: 3000), heavy calcium carbonate (particle diameter: 0.1 to 1.0 μm) or silica gel (average particle diameter: 85 μm, specific surface area: 800 $m^2/g$) is added to process-target water by 20 to 100 mg/L, dissolved silica and calcium ion can be eliminated at a concentration of 55 % maximally, or 36 %.

In addition, Patent Literature 2 discloses a hot-water supply device that has a mechanism of separating the scaled particles from water. More specifically, the hot-water supply circuit of this hot-water supply device includes a hot-water reservoir tank, an external heater that brings water to the boil, and a piping that interconnects the external heater and the upper part of the hot-water reservoir tank and disposed vertically.

In this case, the mechanism of separating the scaled particles from the water is mentioned as a scale catcher. That is, the scale catcher is formed so as to catch the scales precipitated at the lower end part of the bent portion of the piping when the water is boiled, and the scales are deposited in the scale catcher through a sedimentation of the scaled particles by weight thereof.

### Citation List

### Patent Literature

Patent Literature 1: Unexamined Japanese Patent Application Kokai Publication JP-A-2003-117 589
Patent Literature 2: Unexamined Japanese Patent Application Kokai Publication JP-A-2011-058 733.

The document JP 2001129593 A relates to a hot-water supply device comprising a heat exchanger, a hot-water supply tank, a delivery piping to deliver hot-water from the hot-water supply tank to the heat exchanger, a return piping to feed the hot-water from the heat exchanger to the hot-water supply tank, and a scale catcher disposed in a channel of the hot-water supply tank or the piping.

The document EP 1484289 A1 relates to an apparatus for removing scale from domestic or commercial hot-water supplies, wherein the hot-water as passed trough a removal medium, which is contained in a tank, and which is having a larger surface area compared to the inner surface of the tank and is thus forming a large surface area for the scale to deposit on and to a method employing set apparatus.

The document JPH 05245497 A as well as the document JP 2005279406 A also relate to removal of a scale in hot-water supply devices.

## Summary of the Invention

### Technical Problem

As explained above, according to the method disclosed in Patent Literature 1, the process-target water is caused to flow through the column filled with solid particles by utilizing the precipitation and absorption phenomena of calcium or silica in the process-target water. In order to suppress an adhesion of scales in the heat exchanger through such a method, however, an infill with a large amount of solid particles is necessary.

In addition, when the scaled particles produced in a hot-water supply device are eliminated using the filled column formed of particles that are equal to or smaller than 100 μm, a gap between the filled particles is narrow, and thus the column is likely to be clogged by the scaled particles.

Conversely, according to Patent Literature 2, in order to eliminate the scaled particles from water, mainly, the sedimentation characteristic of the scale itself is utilized. In general, the larger the particle is, the faster the sedimentation speed thereof is, and thus the large scaled particles having a particle diameter of equal to or greater than 100 μm can be eliminated through this method. As to the scaled particles having a particle diameter of equal to or smaller than 100 μm, however, the sedimentation speed is slow. Accordingly, a sufficient elimination effect is unobtainable, and it is difficult to suppress an adhesion of the scaled particles in the heat exchanger.

The present invention has been made in view of the foregoing circumstances, and it is an objective of the present invention to provide a hot-water supply device that can suppress a reduction of an absorption performance due to clogging of an adhering material through an absorption of scaled particles, and can eliminate effectively for a long time not only scaled particles with a large sedimentation characteristic but also fine scaled particles with a small sedimentation characteristic.

### Solution to the Problem

The present invention relates to a hot-water supply device as defined by independent claim 1 and independent claim 2, wherein further developments of the inventive hot-water supply device are provided in the sub-claims, respectively.

### Advantageous Effects of the Invention

According to the present invention, a hot-water supply device is provided which can suppress a reduction of an absorption performance due to clogging of an adhering material through an absorption of scaled particles, and can eliminate effectively for a long time not only scaled particles with a large sedimentation characteristic but also fine scaled particles with a small sedimentation characteristic.

## Brief Description of the Drawings

FIG 1 is a schematic structural diagram illustrating hot-water supply device according to a first embodiment;

FIG 2 is a diagram illustrating a structure of a scale catcher of the hot-water supply device according to the first embodiment;

FIG 3A is a diagram illustrating a structure of a scale adhering material according to the first embodiment;

FIG 3B is a diagram illustrating a structure of the scale adhering material according to the first embodiment;

FIG 3C is a diagram illustrating a structure of the scale adhering material according to the first embodiment;

FIG 3D is a diagram illustrating a structure of the scale adhering material according to the first embodiment;

FIG 4A is a diagram illustrating a structure of a curled fiber of another scale adhering material according to the first embodiment;

FIG 4B is a top view illustrating an external appearance of another scale adhering material according to the first embodiment;

FIG 4C is a top view illustrating a structure of a curled fiber of another scale adhering material according to the first embodiment;

FIG 4D is a side view illustrating a structure of a curled fiber of another scale adhering material according to the first embodiment;

FIG 5 is a diagram illustrating a characteristic of the scale adhering material according to the first embodiment;

FIG 6 is a schematic structural diagram illustrating a scale catcher of a hot-water supply device according to a second embodiment;

FIG 7 is a diagram illustrating adherent amounts to a heat exchanger according to a first example and a first comparative example;

FIG 8A is a diagram illustrating an image of an absorbing condition of scaled particles according to the first example;

FIG 8B is a diagram illustrating an image of an absorbing condition of scaled particles according to a Comparative Example 1-1;

FIG 8C is a diagram illustrating an image of an absorbing condition of scaled particles according to a Comparative Example 1-2;

FIG 9 is a diagram illustrating a relationship between a scale adherent amount and energy necessary to produce nuclei of calcium carbonate according to a second example;

FIG 10 is a diagram illustrating scale adherent amounts to a heat exchanger according to a third example and a third comparative example;

FIG 11 is a diagram illustrating a relationship between a representative length of an aperture and a renewal time according to a fourth example; and

FIG 12 is a diagram illustrating scale adherent amounts to a heat exchanger according to a fifth example and a fifth comparative example.

## Description of Embodiments

Embodiments to carry out the present invention will be explained below in detail with reference to the accompanying drawings. The same or equivalent portion in the drawings will be denoted by the same reference numeral, and the detailed explanation thereof will be omitted.

## First Embodiment

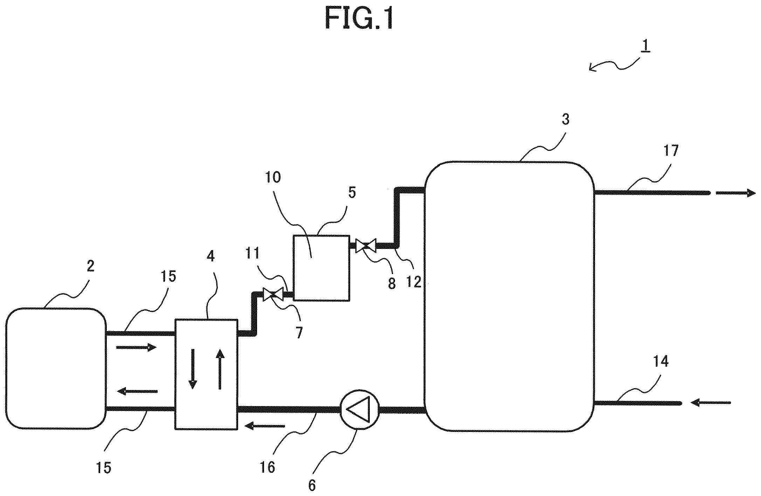

FIG 1 is a schematic structural diagram illustrating a hot-water supply device according to a first embodiment. First, a brief explanation will be given of the structure of a hot-water supply device 1 illustrated in FIG 1. As illustrated in FIG 1, the hot-water supply device 1 mainly includes a heat source 2, a hot-water supply tank 3, a heat exchanger 4, and a scale catcher 5.

In addition, two circuits are circulated inside the hot-water supply device 1. The one is a circuit (heat-medium circulating circuit) having heat circulating the heat source 2 and the interior of the heat exchanger 4. The other is a circuit (hot-water circulating circuit) having hot water (including water in some cases) circulating the hot-water supply tank 3, the interior of the heat exchanger 4, and the scale catcher 5.

These circuits are connected together via a feeding piping and a return piping. The piping of the hot-water circulating circuit is provided with a circulating pump 6 and flow channel open/close valves 7 and 8 for an operation of the hot-water supply device 1.

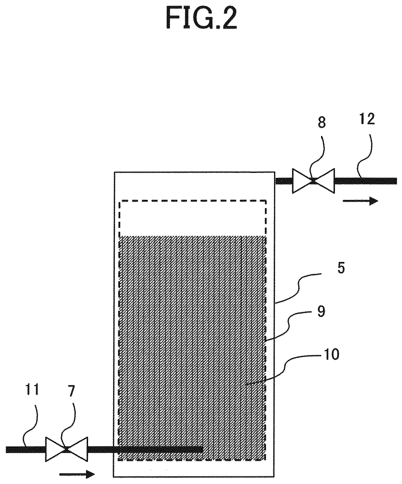

FIG 2 is a diagram illustrating a structure of the scale catcher of the hot-water supply device according to the first embodiment. As illustrated in FIG 2, the scale catcher 5 includes a scale-adhering-material holder/retainer 9, and a scale adhering material 10 filled in the scale-adhering-material holder/retainer 9. In addition, the scale catcher 5 is connected with a scale catcher inlet piping 11, the flow channel open/close valves 7 and 8, and a scale catcher outlet piping 12.

According to a modified example of the hot-water supply device 1 illustrated in FIGs. 1 and 2, it is not always necessary that the heat-medium circulating circuit is a circulating circuit of a heat pump type or the like, and such a circuit can utilize any arbitrary medium as long as a medium that heats circulating hot water is applicable. For example, those skilled in the art can apply to other electric hot-water supply devices, gas hot-water supply devices, or petroleum hot-water supply devices, and the like.

In addition, the most suitable location of connecting the scale catcher 5 (scale adhering material 10) is a space between the heat exchanger 4 and the hot-water supply tank 3 as illustrated in FIG 1, but as a modified example in the hot-water circulating circuit, the scale catcher may be connected at any locations other than the aforementioned location as long as the scale catcher is connected in the piping of the hot-water circulating circuit.

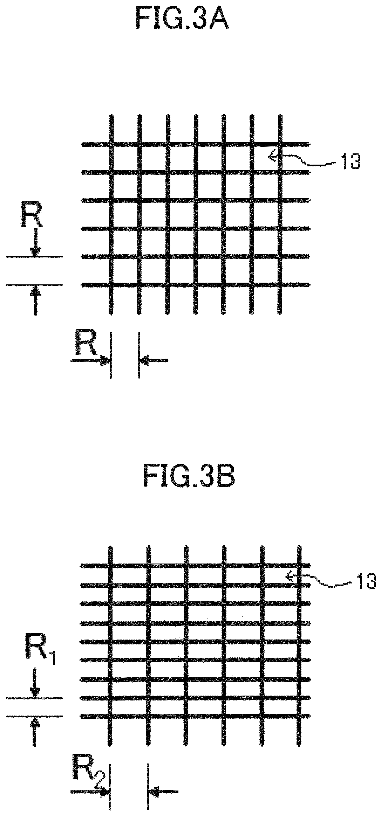

FIGs. 3A to 3D are diagrams illustrating a structure of a scale adhering material according to the first embodiment. The whole structure of the scale adhering material 10 filled in the scale-adhering-material holder/retainer 9 is, for example, as illustrated in FIGs. 3A to 3D, formed of equal to or greater than 10 partial structures with a large number of apertures 13 laminated in a direction (e.g., a direction from the left to the right or from the bottom to the top in the case of the scale catcher 5 in FIG 2) orthogonal to the flow of the scale catcher 5.

As modified examples, a twisted partial structure or a bent partial structure are applicable. In addition, with respect to the lamination of the scale adhering material 10, it is preferable that equal to or greater than 10 partial structures should be laminated in such a way that the respective apertures 13 of the scale adhering material 10 are not aligned relative to the flow direction of hot water so as to increase a collision probability between the scaled particles in the hot water and the scale adhering material 10. For example, it is preferable that equal to or greater than 10 partial structures should be laminated so as to have the apertures 13 oriented alternatively or irregularly.

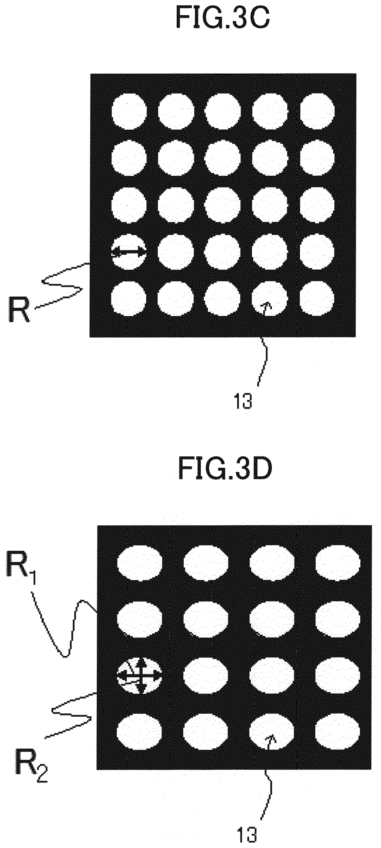

When, however, the partial structures of the adhering material illustrated in FIG 3C or 3D are laminated, when the apertures 13 of an arbitrary layer are completely covered by the respective non-aperture portions (area other than the aperture 13) of the upper and lower layers, water becomes not to flow partially. In this case, it becomes difficult for the scale adhering material 10 to catch the scaled particles.

Hence, it is desirable that a gap between the adjoining laminated layers should be equal to or greater than 1 mm in such a way that the apertures 13 of an arbitrary layer do not overlap the non-aperture portions of the upper and lower laminated layers. Example schemes to form a gap is to place a spacer therebetween having a thickness of equal to or greater than 0.1 mm, or to place therebetween the partial structure of the adhering material employing the structure as illustrated in FIG 3A or 3B.

A detailed explanation will be given of the scale adhering material 10 and the apertures 13. As illustrated in FIGs. 3A to 3D, the partial structure of the scale adhering material 10 is formed of a mesh shape or a planar shape formed with a large number of circular holes (apertures 13), and can employ a high aperture ratio.

More specifically, structures in which lines forming a mesh are aligned at an equal interval R as illustrated in FIG 3A, lines forming a mesh are regularly aligned at pitches $R_1$ and $R_2$ as illustrated in FIG 3B, the circular apertures 13 are a circle with a diameter of R as illustrated in FIG 3C, the circular apertures 13 are in an elliptical shape with a longer axial length of $R_1$ and a shorter axial length of $R_2$ as illustrated in FIG 3D, and the like are applicable.

As to the shape of the apertures 13, it is not limited to any particular shape as long as it can employ a high aperture ratio and can be other shapes, such as a triangle, a rectangle, a polygon, a star-like shape, and the like. More specifically, as to the aperture ratio according to the first embodiment, when the area of the aperture 13 of the scale adhering material 10 is S, and the outer circumference is P, it is preferable that a representative length L of the aperture 13 defined by $L = 4S/P$ should be equal to or greater than 1 mm and equal to or smaller than 20 mm.

More specifically, it is requisite that the pressure loss increase in the circulation channel due to the use of the scale catcher 5 should be equal to or smaller than 50 kPa at a flow rate of 20 L/Min in general. Accordingly, the representative length L of the aperture 13 defined by $L = 4S/P$ should be desirably equal to or greater than 1 mm and equal to or smaller than 20 mm.

In addition, when it is required to suppress the pressure loss increase in the circulation channel due to the use of the scale catcher 5 to be equal to or smaller than 20 kPa at a flow rate of 20 L/Min, it is desirable that the representative length L of the aperture 13 defined by $L = 4S/P$ should be equal to or greater than 1 mm and equal to or smaller than 10 mm.

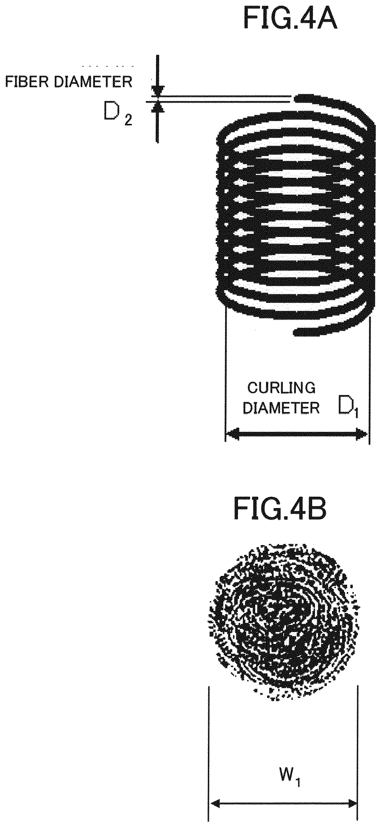

Conversely, as another structure of the scale adhering material 10 filled in the scale-adhering-material holder/retainer 9, a scale adhering material 10 employing a curled fiber shape as illustrated in FIG 4A is also applicable. The scale adhering material 10 formed of a curled fiber is defined by characteristic parameters, such as a curling diameter $D_1$ corresponding to the representative length of the aperture, a fiber diameter $D_2$ of the curled fiber, an outer diameter (and an outer diameter of the aggregation of the curled fibers) of the curled fiber, and a height.

When the curled fiber has a cross section not in a circular shape, and when the cross-sectional area of the curled fiber is T, and the outer circumference is Q, it is presumed that a representative length M defined as $M = 4T/Q$ is equal to the fiber diameter $D_2$. The curling diameter $D_1$ is defined by the internal dimension of the fiber. Hence, regardless of the fiber diameter $D_2$, the smaller the curling diameter $D_1$ is, the smaller the one corresponding to the representative length of the aperture becomes, and thus the porosity of the aggregation decreases.

In practice, it is desirable that the tensile strength of the curled fiber should be 2 kg to 4 kg. Such a condition corresponds to the corrosion durability of equal to or longer than 10 years in the case of a hot-water supply device heated to a temperature of equal to or higher than 60 °C. When the curled fiber is formed of stainless steel, it is practical even if $D_2$ is equal to or greater than 10 $\mu$m.

The curled fiber can be formed by uniformly compressing a predetermined stainless steel line (for example, SUS304) using an exclusive roller. FIG 4B is a top view illustrating the external appearance of another scale adhering material according to the first embodiment. As illustrated in FIG 4B, an aggregation (scale adhering material 10) formed of the curled fibers as viewed from the top has an outer diameter of $W_1$.

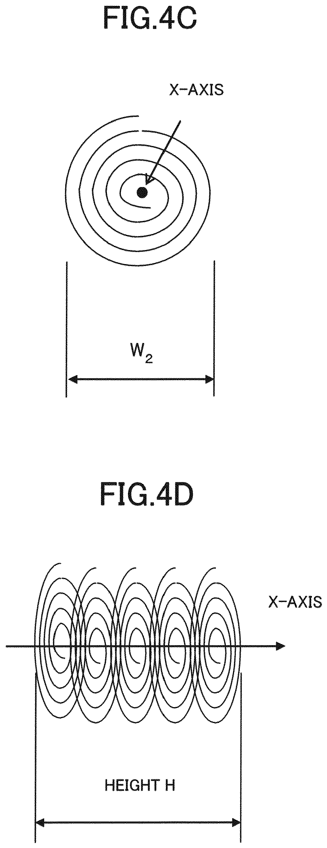

In addition, FIGs. 4C and 4D are each a top view and a side view illustrating a structure of the curled fiber of another scale adhering material according to the first embodiment. As illustrated in FIG 4C, the curled fiber as viewed from the top has an outer diameter of $W_2$. When it is presumed that FIGs. 4C and 4D are exemplary diagrams of the aggregation formed of the curled fibers illustrated in FIG 4B, $W_1 = W_2$, and a height H illustrated in FIG 4D is a height of the aggregation.

When, for example, the curled fiber is uniformly rolled in a constant direction orthogonal to an X-axis direction as illustrated in FIGs. 4C and 4D, it becomes a cylindrical three-dimensional shape illustrated in the top view of FIG 4B. In general, it is desirable that the scale-adhering-material holder/retainer 9 should be formed in a cylindrical shape, and thus it is also desirable that the aggregation formed of the curled fibers should be formed in a cylindrical shape matching the retainer.

In addition, when the diameter of the internal wall of the cylindrical scale-adhering-material holder/retainer 9 is R, the outer diameter $W_1$ of the aggregation formed of the curled fibers illustrated in FIG 4B can be set in accordance with the elasticity of the aggregation formed of the curled fibers and the density thereof. More specifically, it is desirable that such an outer diameter should be equal to or greater than 1.01 times as much as R and equal to or smaller than 3 times as much as R.

The aggregation may be formed of the curled fibers tangled irregularly (unillustrated), but when the density distribution of the curled fibers in the aggregation is nonuniform, it is difficult for the aggregation to deform in accordance with the shape of the scale-adhering-material holder/retainer 9, and when the aggregation is filled in the scale-adhering-material holder/retainer 9, an empty space may be created between the scale-adhering-material holder/retainer 9 and the aggregation.

It is desirable that the empty space between the scale-adhering-material holder/retainer 9 and the scale adhering material 10 (the aggregation of the curled fibers) should be equal to or smaller than twice as much as the curling diameter $D_1$ (see FIG 4A).

Including the one formed of such curled fibers, an example base material of the scale adhering material 10 applicable is copper, brass, stainless steel, a silicon rubber, glass, iron, oxidized iron (III, II), polytetrafluoroethylene (a Teflon (registered trademark) resin (PTFE, PFA)), polyvinyl chloride, polyethylene, polystyrene, polypropylene, polysulfonate, an isoprenoid rubber, a butadiene rubber, a styrene-butadiene rubber, or aromatic-series polyamide (for example, nylon-6 or nylon-6-6 and like).

Among these materials, copper, brass, stainless steel, a silicon rubber, glass, iron, oxidized iron (III, II), polyvinyl chloride, polyethylene, polystyrene, polypropylene, polysulfonate, an isoprenoid rubber, a butadiene rubber, or a styrene-butadiene rubber is preferable.

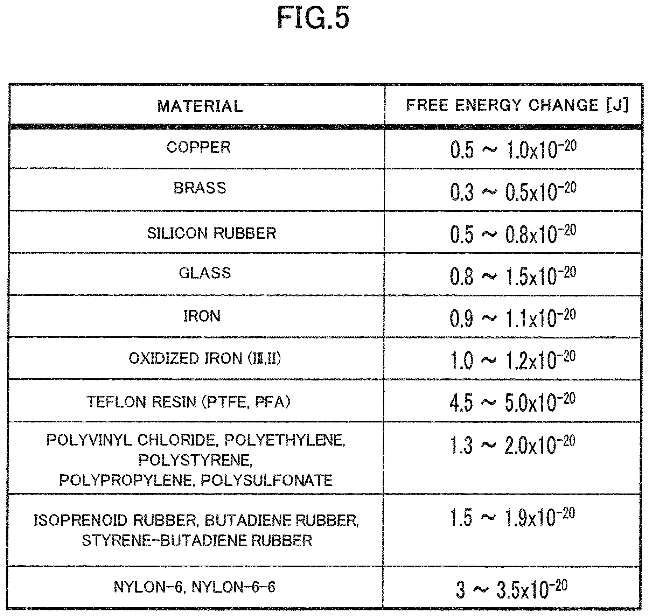

FIG 5 is a diagram illustrating a characteristic of the scale adhering material according to the first embodiment. More specifically, this figure illustrates an energy barrier (0 to 90 °C) when nuclei of calcium carbonate are produced on the surface of the base material of the scale adhering material 10. It is not illustrated in the figure but, for example, the nuclei producing energy $\Delta G$ of calcium carbonate on a stainless steel surface is within a range of 0.8 to $1.0 \times 10^{-20}$ (J).

The smaller the energy necessary for producing the nuclei of calcium carbonate is, the more the base material is likely to produce nuclei on the surface of the scale adhering material 10. The base material of the scale adhering material 10 is not limited to the above-explained examples, and one that has similar energy to produce nuclei of calcium carbonate is applicable as the base material of the scale adhering material 10. A preferable example base material is a material having energy necessary for producing nuclei of calcium carbonate on the surface of equal to or smaller than $2.0 \times 10^{-20}$ (J).

Next, an operating method of the hot-water supply device 1 will be explained. As illustrated in FIG 1, first, tap water is introduced to the hot-water supply tank 3 through a tap water piping 14, and when such a tank is filled with the water, the heat source 2 is activated, thereby circulating the high-temperature heat medium in a circulation piping 15.

While at the same time, the circulation pump 6 is activated to supply water in the hot-water supply tank 3 to the heat exchanger 4 through a heat-exchanger inlet piping 16 and to heat the water through a heat exchange with the heat medium. The hot water heated in the heat exchanger 4 is supplied to the scale catcher 5 through the scale catcher inlet piping 11, contacts the scale adhering material 10 in the scale catcher 5, and is returned to the hot-water supply tank 3 through the scale catcher outlet piping 12.

The circulation of the heat medium and the hot water in the hot-water supply tank 3 is continued until the water temperature in the hot-water supply tank 3 becomes a predetermined temperature, and after the heating, the hot water in the hot-water supply tank 3 is supplied through a hot-water supply piping 17 as needed, and utilized as hot water.

When the scaled-particle absorption performance of the scale catcher 5 (scale adhering material 10) decreases, after the operation has been terminated, the scale catcher 5 can be taken out ahead of the flow channel open/close valves 7 and 8, and can be replaced with the scale catcher 5 filled with the scale adhering material 10 absorbing no scaled particle.

As explained above, according to the hot-water supply device 1 of the first embodiment, the scale adhering material 10 has apertures 13 with a certain and sufficient size, and is formed of a base material that has energy of producing, at a surface of, nuclei of calcium carbonate which is equal to or smaller than a specific quantity.

Hence, the reduction of the absorption performance of the scale adhering material 10 due to clogging inherent to the absorption of the scaled particles can be suppressed, and it becomes possible for the hot-water supply device to eliminate not only scaled particles with a large sedimentation characteristic but also fine scaled particles with a small sedimentation characteristic from the water efficiently. Accordingly, an adhesion of the scaled particles to the heat exchanger 4 of the heat-pump hot-water supply device, and the like can be suppressed for a long time.

## Second Embodiment

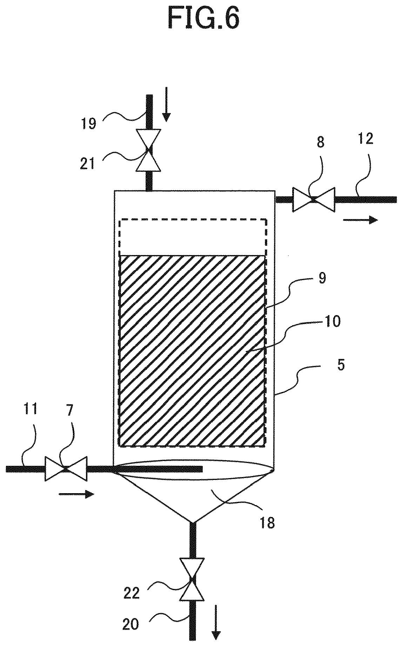

FIG 6 is a schematic structural diagram illustrating a scale catcher of a hot-water supply device according to a second embodiment. The same structure as that of the first embodiment is employed except that the scaled particles absorbed by the scale catcher 5 are cleaned to renew the scale adhering material 10. The same is true of the shape of the scale adhering material 10, the base material thereof, how to fill such a material, and the like.

As illustrated in FIG 6, the scale catcher 5 includes the scale-adhering-material holder/retainer 9 filled with the scale adhering material 10, and a scale reservoir 18, and is connected with the scale catcher inlet piping 11, the scale catcher outlet piping 12, a tap water supply piping 19, and a scale drain piping 20.

An explanation will be given of a cleaning method when the scale-particle absorption performance of the scale catcher 5 according to the second embodiment decreases. First, the circulation pump 6 (see FIG 1) is deactivated to terminate the circulation of tap water, and the flow channel open/close valves 7 and 8 are closed.

Next, flow channel open/close valves 21, 22 illustrated in FIG 6 are opened to supply the tap water to the scale catcher 5, and the scale adhering material 10 is cleaned with the tap water containing no scaled particle. The water after the cleaning is drained through the scale drain piping 20.

When a cleaning fluid other than tap water is used, after the flow channel open/close valves 21 and 22 have been opened, the cleaning fluid may be supplied using a pump. It is preferable that the cleaning fluid should be a water solution with an acidic property of pH < 5. An example acid applicable is hydrochloric acid, sulfuric acid, nitric acid, or acetic acid and like.

In order to enhance the cleaning effect by the cleaning fluid, with the tip of the tap water supply piping 19 being opened to the ambient air, the flow channel open/close valves 21, 22 are opened, water left inside the scale catcher 5 is drained, and the tap water or the cleaning fluid may be introduced. Since the air-liquid interface has a high absorption performance of scaled particles, by repeating the supply and draining of the water or cleaning fluid to the interior of the scale catcher 5, the water level may be ascended and descended to clean the scale adhering material 10.

In order to efficiently absorb the scaled particles through the air-liquid interface, it is desirable that the ascending or descending speed of the air-liquid interface should be controlled within a range of equal to or faster than 0.1 cm/s and equal to or slower than 10 cm/s.

In addition, when fine bubbles utilizing air are introduced to the scale adhering material 10 and the scale adhering material 10 is cleaned by an air-liquid interface with a high density, the time necessary for renewing the scale adhering material 10 can be reduced. It is desirable that the fine bubbles should have a size within a range of equal to or larger than 1 μm and equal to or smaller than 1 mm.

According to the hot-water supply device 1 of the second embodiment as explained above, the scaled particles adsorbed by the scale adhering material 10 can be eliminated and the scale adhering material 10 can be cleaned and renewed through a further simple work. As a result, the adhering of the scaled particles to the heat exchanger 4 in the hot-water supply device 1 can be suppressed for a further long time.

## EXAMPLES

### First Example and First Comparative Example

A first example relates to a test for a scale adhesion suppressing effect formed on a heat transfer surface in the heat exchanger 4 in pipings of the hot-water circulating circuit when the hot-water supply device 1 of the first embodiment illustrated in FIG 1 is applied, and for the performance of the scale catcher 5.

As a test scheme, first, water with a hardness of 300 mg/L, pH of 7.8, a temperature of 20 °C, and a volume of 200 L was retained in the hot-water supply tank 3, and the water in the hot-water supply tank 3 was heated while being caused to circulate in a plate type water-water heat exchanger. The total heat transfer surface area of the heat exchanger 4 was 0.9 $m^2$.

Heated hot water was caused to circulate at the heat-medium circulating circuit side in the heat exchanger 4, and the water in the hot-water supply tank 3 was caused to circulate at the hot-water circulating circuit side in the heat exchanger 4 at a flow rate of 20 L/Min, and the water was heated to a temperature of 60 °C insubstantially one hour.

When the ratio of the circulated water quantity during the heating cycle relative to the volume of the hot-water supply tank 3 is defined as a circulation ratio, the circulation ratio was 6 (= 20 L/Min × 60 minutes/200 L). Under such a condition, the amount of adherent scales formed on the heat transfer surface of the heat exchanger 4 at the hot-water circulating circuit side was compared when the following scale catchers were utilized in water.

As to a first example, as the scale adhering material 10 of the scale catcher 5 (volume: 1.7 L), 30 stainless steel mesh pieces laminated together and filled in the catcher were applied. The mesh piece is a mesh formed of stainless steel lines with a diameter of 200 μm, and a pitch R between the lines (a width of an aperture) was a uniform interval which was 300 μm (see FIG 3A). The dimension of the whole mesh piece was 6 mm by 6 mm which was a square. That is, the representative length L of the aperture 13 was 300 μm.

As to a Comparative Example 1-1, one having 30 Teflon (registered trademark) mesh pieces laminated together and filled therein was utilized as the scale adhering material 10 of the scale catcher 5 (volume: 1.7 L). The mesh piece was a meth formed of Teflon (registered trademark) lines with a diameter of 200 μm, and the pitch R (the width of an aperture) between the Teflon (registered trademark) lines was an equal interval which was 300 μm (see FIG 3A). The size of the mesh piece was 6 mm by 6 mm which was a square. That is, the representative length L of the aperture 13 was 300 μm.

As to a Comparative Example 1-2, one having 30 stainless steel mesh pieces laminated together and filled therein was utilized as the scale adhering material 10 of the scale catcher 5 (volume: 1.7 L). The mesh piece was a mesh formed of stainless steel lines with a diameter of 200 μm, and the pitch R (the width of an aperture) between the lines was an equal interval which was 50 μm (see FIG 3A). The size of the mesh piece was 6 mm by 6 mm which was a square. That is, the representative length L of the aperture 13 was 50 μm,

Still further, as other comparative examples, the amount of adherent scales was evaluated for a case (Comparative Example 1-3) in which a scheme of causing the scaled particles deposited through the sedimentation by gravity as explained above, and for a case (Comparative Example 1-4) in which the scale catcher 5 was removed.

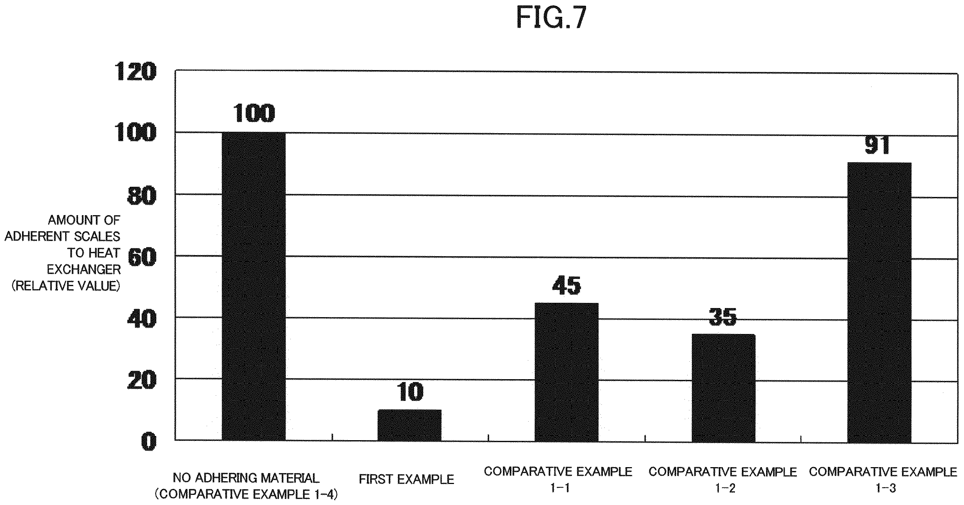

FIG 7 is a diagram illustrating the amounts of adherent scales to the heat exchanger according to the first example and the first comparative example. More specifically, in the first example and Comparative Examples 1-1 to 4, the amounts of adherent scales to the heat exchanger 4 at the hot-water circulating circuit side are shown when the hot-water supply device 1 was continuously operated for a month under the above-explained condition. These amounts are indicated as relative values when the adhering amount when the scale catcher 5 was removed (Comparative Example 1-4) is taken as 100 %.

As illustrated in FIG 7, according to the first example, a reduction rate of 90 % was obtained which was an excellent performance, but the reduction rate was only 55 % in the case of the Comparative Example 1-1 and was only 65 % in the case of the Comparative Example 1-2. In the case of the scale catcher that utilized the gravity according to the Comparative Example 1-3, the reduction rate was 9 % which was low.

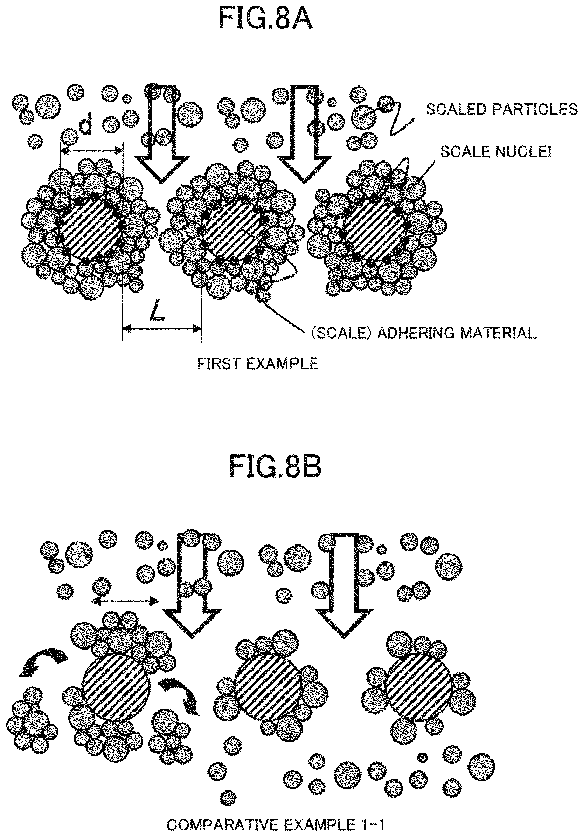

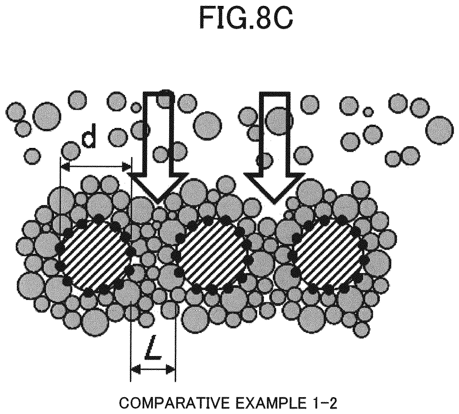

When the particle diameter of the scaled particle grown together with heating was measured, such a diameter was distributed within a range of 0.5 to 50 $\mu$m, and a distribution having a peak within a range of 1 to 40 $\mu$m was obtained. FIGs. 8A to 8C are diagrams illustrating the absorbing conditions of the scaled particles according to the first example, the Comparative Example 1-1 and the Comparative Example 1-2, and exemplarily illustrating a nucleation catching effect utilized according to the present invention. In the first example, the reason why the reduction rate of the amount of adherent scales to the heat exchanger 4 will be explained with reference to FIGs. 8A to 8C.

According to the first example, since the energy necessary for nucleation of calcium carbonate on the surface of the scale adhering material 10 was 0.8 to 1.0 $\times$ $10^{-20}$ (J) which was sufficiently small, the nucleation on the surface of the scale adhering material 10 was advanced, and thus a larger amount of scaled particles were caught due to a nucleation catching effect.

In addition, since the representative length L (defined as L = 4S/P where S is the area of the aperture 13 and P is the outer circumference) of the aperture 13 of the scale adhering material 10 was equal to or greater than 100 $\mu$m, scaled particles with a particle diameter of 1 to 40 $\mu$m did not cause the adhering material clogged.

According to the Comparative Example 1-1, since the energy necessary for nucleation of calcium carbonate on the surface of the scale adhering material 10 was 4.5 to 5.0 $\times$ $10^{-20}$ (J) which was large, and the nucleation did not advance on the surface of the scale adhering material 10, the nucleation catching effect was unavailable, and thus the amount of adherent scaled particles was little. In addition, it becomes clear that the scaled particle once adhered were likely to be released, and thus the catching performance of the scaled particle decreased.

According to the Comparative Example 1-2, since the energy necessary for nucleation of calcium carbonate on the surface of the scale adhering material 10 was sufficiently small, the nucleation was advanced on the surface of the scale adhering material 10, and a larger amount of scaled particles were caught through the nucleation catching effect.

However, since the representative length L of the aperture 13 of the scale catching material 10 was 50 $\mu$m which was narrow, the scale adhering material was clogged by the scaled particles with a particle diameter of 1 to 40 $\mu$m, and the catching performance of the scaled particle decreased.

According to the scale catcher of the Comparative Example 1-3, the sedimentation speed to the scaled particle with a particle diameter of equal to or smaller than 100 $\mu$m was slow, and thus a sufficient scaled particle catching performance was not obtained.

It becomes further clear that, from the results of the first example and the first comparative example as explained above, in the hot-water supply device 1 including the scale catcher 5, when the scale adhering material 10 has a sufficient aperture 13 (4S/P > 100 $\mu$m where S is the area of the aperture 13 and P is the outer circumference), and is formed of a base material that has the nucleation energy of calcium carbonate on the surface of the scale adhering material 10 which is equal to or smaller than 2.0 $\times$ $10^{-20}$ (J), there are advantageous effects that the scale adhering material 10 can utilize the nucleation catching effect and has an excellent scale catching performance, and a reduction of the absorption performance of the adhering material due to clogging caused by the absorption of the scaled particles can be suppressed.

In addition, it is also confirmed that when not only the scaled particles with a large sedimentation characteristic but also fine scaled particles with a small sedimentation characteristic are efficiently eliminated from water, it becomes possible to suppress an adhesion of scales to the heat exchanger 4 of the hot-water supply device 1 for a long time.

Second Example

A second example relates to cases in which various materials were applied as the scale adhering material 10 when the hot-water supply device 1 according to the first embodiment and illustrated in FIG 1 (the representative length L of the aperture 13 was 300 $\mu$m) was utilized. The amount of scales caught in the scale catcher 5 when the following scale catchers were utilized in water were compared.

Filled in the scale catcher 5 (volume: 1.7 L) was, as the scale adhering material 10, mesh pieces formed of copper, brass, stainless steel, a silicon rubber, glass, iron, oxidized iron (III, II), a Teflon (registered trademark) resin (PTFE, PFA), polyvinyl chloride, polyethylene, polystyrene, polypropylene, polysulfonate, an isoprenoid rubber, a butadiene rubber, a styrene-butadiene rubber, or aromatic-series polyamide (for example, nylon-6 or nylon-6-6 and like).

The mesh piece was a mesh formed of lines with a diameter of 200 μm, and the pitch R (width of aperture) between the lines was an equal interval which was 300 μm (see FIG 3A). The operating condition other than the base material of the scale adhering material 10 was set as the same as that of the first example.

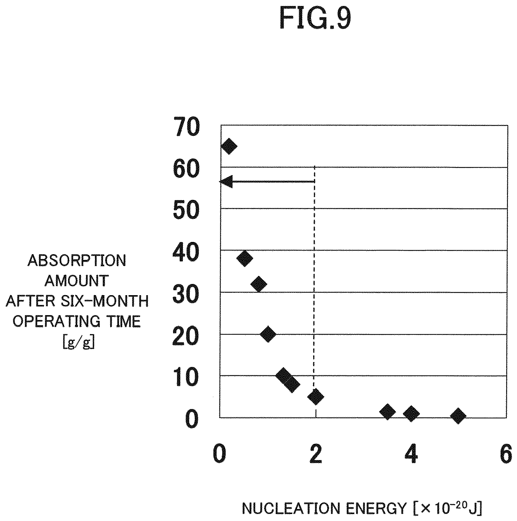

FIG 9 is a diagram illustrating a relationship between the amount of adherent scales and energy necessary for a nucleation of calcium carbonate according to the second example. More specifically, this is a figure illustrating a relationship between the amount of scales (g/g) caught in each scale catcher 5 after the hot-water supply device 1 was continuously operated for six months and energy $2.0 \times 10^{-20}$ (J) necessary for the nucleation of calcium carbonate.

An arrow in FIG 9 indicates a break of the horizontal axis where the nucleation energy became equal to or smaller than $2.0 \times 10^{-20}$ (J). An example base material of such a scale adhering material 10 is copper, brass, stainless steel, a silicon rubber, glass, iron, oxidized iron (III, II), polyvinyl chloride, polyethylene, polystyrene, polypropylene, polysulfonate, an isoprenoid rubber, a butadiene rubber, or a styrene-butadiene rubber.

When these were applied as the base material of the scale adhering material 10, the nucleation was advanced on the surface of the scale adhering material 10, which enabled a utilization of the nucleation catching effect, and it was possible to catch a larger amount of scaled particles. In addition, as explained above, when the particle diameter of the scaled particle grown together with heating was measured, it had a distribution within a range of 0.5 to 50 μm, and a distribution having a peak within 1 to 40 μm was obtained.

Since the representative length L (defined as L = 4S/P where S is the area of the aperture 13 and P is the outer circumference) of the aperture 13 of the scale adhering material 10 was equal to or greater than 100 μm, scaled particles with a particle diameter of 1 to 40 μm did not cause the adhering material clogged.

In this case, a nucleation energy ΔG of calcium carbonate on the surface of the scale adhering material 10 can be expressed by the following (Formula 1) when a critical nucleus radius is $r_c$ (m) and a surface tension between calcium carbonate and the base material of the scale adhering material 10 is γ (J/m$^2$).

Formula 1

$$\Delta G = 4\pi\gamma r_c^{\,2}/3$$

In addition, since the nucleation is mainly a thermal excitation process, a nucleation speed J is given from the following (Formula 2).

Formula 2

$$J = A\exp(-\Delta G/kT)$$

In the foregoing Formula (2), A is a frequency factor (constant), k is the Boltzmann constant, and T is a temperature. The reason why the value of the nucleation energy can be a break at $2.0 \times 10^{-20}$ (J) in the second example can be explained as follows. When a nucleation speed if the nucleation energy ΔG is $2.0 \times 10^{-20}$ (J) is $J_0$, the nucleation speed when the nucleation energy ΔG is $1.0 \times 10^{-20}$ (J) or $3.0 \times 10^{-20}$ (J) becomes $11J_0$ or $0.091J_0$ in each case.

In order to suppress an adhesion of scales to the heat exchanger 4 of the hot-water supply device 1 for a long time by efficiently eliminating the scaled particles from water using the scale adhering material 10 connected with the hot-water supply device 1 of the first embodiment, a nucleation speed that is substantially equal to or faster than $J = J_0$ is necessary in practice.

That is, in the case of the base material having a nucleation energy on the surface of the adhering material that is larger than $2.0 \times 10^{-20}$ (J), the nucleation speed J decreases like an exponential function, and thus it is difficult to utilize the nucleation catching effect, which is not a desirable case.

Hence, it is preferable that the nucleation energy of the scale adhering material 10 utilizing the nucleation catching effect relative to the hot-water supply device 1 using the heat exchanger 4 which has a normal heat transfer performance (total heat transfer coefficient: 0.5 to 5 kW/m$^2$/K) should be equal to or smaller than $2.0 \times 10^{-20}$ (J).

In addition, regarding the hot-water supply device 1 which utilizes, as the heat exchanger 4, one employing a narrow water channel of equal to or smaller than 1.5 mm, it is desirable to further enhance the scaled particle catching performance of the scale adhering material 10, and thus it is preferable that the nucleation energy of such a scale adhering material 10 should be equal to or smaller than $1.5 \times 10^{-20}$ (J).

An example base material of such a scale adhering material 10 is copper, brass, stainless steel, a silicon rubber, glass, iron or oxidized iron (III, II) and like. Regarding the hot-water supply device 1 that utilizes the heat exchanger 4 which has a high heat transfer performance (total heat transfer coefficient: equal to or greater than 5 kW/m$^2$/K), it is desirable to further enhance the scaled particle catching performance of the scale adhering material 10, and thus it is preferable that the nucleation energy of such a scale adhering material 10 should be equal to or smaller than $1.0 \times 10^{-20}$ (J). An example base material of such a scale adhering material 10 is copper, brass, stainless steel or a silicon rubber and like.

The base material of the scale adhering material 10 is not limited to the above-explained materials in the second example. As long as the energy necessary for the nucleation of calcium carbonate is substantially at the same level, the nucleation catching effect becomes available, and such a material is applicable for the scale adhering material 10. As to a material which has unknown nucleation energy $\Delta G$, when a surface tension $\gamma$ ($J/m^2$) between calcium carbonate and the base material of the adhering material is evaluated through, for example, a contact angle technique, $\Delta G$ can be estimated through the (Formula 1).

As explained above, according to the second example, it is confirmed that, in the hot-water supply device 1 including the scale catcher 5, when the scale adhering material 10 is formed of a base material having the nucleation energy of calcium carbonate on the surface of the scale adhering material that is equal to or smaller than $2.0 \times 10^{-20}$ (J), the nucleation catching effect becomes available, and the scale catching performance of the scale adhering material 10 is enhanced.

Third Example and Third Comparative Example

A third example relates to a test when the hot-water supply device 1 including the scale catcher 5 according to the second embodiment illustrated in FIG 6 was utilized. More specifically, the scale catcher 5 was periodically cleaned to carry out a renewal work, and various scale catcher in water were applied to carry out the test.

As a test procedure, water with a hardness of 300 mg/L, pH of 8.7, a temperature of 20 °C, and a volume of 200 L was retained in the hot-water supply tank 3, and the water in the hot-water supply tank 3 was heated while being caused to circulate in the plate type water-water heat exchanger. Under such a condition, the amounts of adherent scales to the heat transfer surface of the heat exchanger 4 at the hot-water circulating circuit side when the following scale catchers were utilized in water were compared.

In the third example, the same filler as that of the first example was used, the representative length L of the aperture 13 was 300 $\mu$m, and a continuous operation was performed under the same operating condition as that of the first example.

In addition, tap water was supplied for 10 minutes at a flow rate of 40 L/Min and at a cycle of once per a month to clean the scaled particles absorbed in the scale catcher 5. In a Comparative Example 3-1, the same filler as that of the above-explained Comparative Example 1-1 was used, the representative length L of the aperture 13 was 300 $\mu$m, and a continuous operation was performed under the same operating condition as that of the third example.

In a Comparative Example 3-2, the same filler as that of the above-explained Comparative Example 1-2 was used, the representative length L of the aperture 13 was 50 $\mu$m, and a continuous operation was performed under the same operating condition as that of the third example.

In a Comparative Example 3-3, the same filler as that of the above-explained first example was used, the representative length L of the aperture 13 was 300 $\mu$m, and a continuous operation was performed under the same operating condition as that of the first example. However, no cleaning and renewal during the continuous operation was performed.

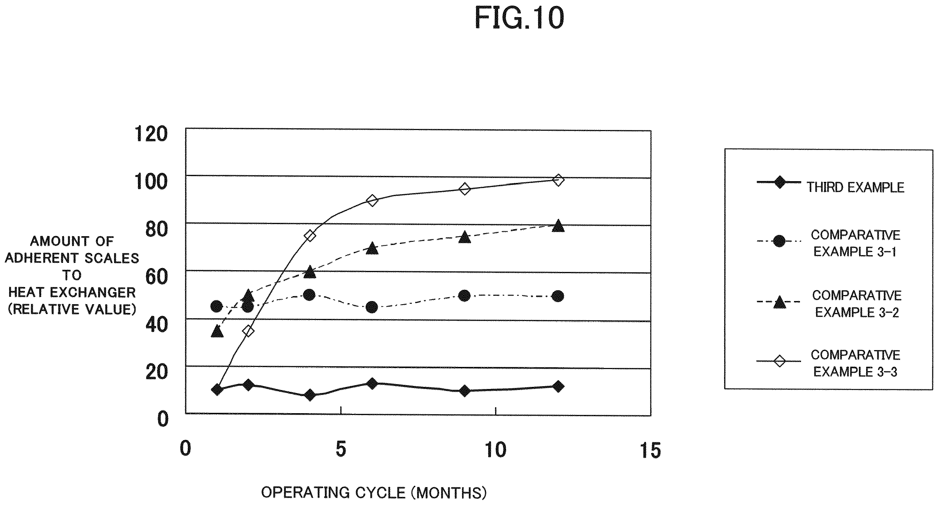

FIG 10 is a diagram illustrating the amounts of adherent scales to the heat exchanger in the third example and the third comparative example. More specifically, this figure illustrates a relative value of the amount of adherent scales in each case when the hot-water supply device 1 was continuously operated for 12 months with the amount of adherent scales when the scale catcher 5 was removed being as 100 %.

As illustrated in FIG 10, in the third example, a high performance which was a reduction rate of 90 % was maintained for 12 months, but in the Comparative Example 3-1, a reduction rate of substantially 55 % was maintained for 12 months.

In the Comparative Example 3-2, an initial reduction rate was substantially 60 %, but the reduction rate was deteriorated to 40 % after four months and to 30 % after six months. In the Comparative Example 3-3 in which no renewal work was performed, a high reduction rate that was equal to or greater than 60 % was obtained for the first two months, but the scale catching performance decreased after four months, and a reduction rate decreased to be equal to or lower than 10 % after six months.

In this case, according to the third example, the reason why the reduction rate of the amount of adherent scales to the heat exchanger 4 for a long time will be explained. As explained above, the particle diameter of the scaled particle grown together with heating had a distribution within a range of 0.5 to 50 $\mu$m, and a distribution having a peak within a range of 1 to 40 $\mu$m was obtained.

According to the third example, since the energy necessary for nucleation of calcium carbonate on the surface of the scale adhering material 10 was 0.8 to $1.0 \times 10^{-20}$ (J) which was sufficiently small, the nucleation on the surface of the scale adhering material 10 was advanced, and thus a larger amount of scaled particles were caught.

In addition, since the representative length L (defined as L = 4S/P where S is the area of the aperture 13 and P is the outer circumference) of the aperture 13 of the scale adhering material 10 was equal to or greater than 100 $\mu$m, the adherent scaled particles were sufficiently eliminated through a simple cleaning work that was to supply tap water, and thus a high performance was maintained for a long time.

According to the Comparative Example 3-1, since the energy necessary for nucleation of calcium carbonate on the surface of the scale adhering material 10 was 4.5 to $5.0 \times 10^{-20}$ (J) which was large, and the nucleation did not advance on the surface of the scale adhering material 10, the amount of adherent scaled particles was small.

However, since the representative length L (defined as L = 4S/P where S is the area of the aperture 13 and P is the outer circumference) of the aperture 13 of the scale adhering material 10 was equal to or greater than 100 $\mu$m, and the amount of adherent scales was small, the adherent scaled particles were sufficiently eliminated through a simple cleaning work that was to supply tap water, and thus a high performance was maintained for a long time.

According to the Comparative Example 3-2, since the energy necessary for nucleation of calcium carbonate on the surface of the scale adhering material 10 was sufficiently small, the nucleation was advanced on the surface of the scale adhering material 10, and a larger amount of scaled particles were caught.

However, since the representative length L of the aperture 13 of the scale catching material 10 was 50 $\mu$m which was narrow, the catcher was clogged by the scaled particles with a particle diameter of 1 to 40 $\mu$m, and thus the catching performance of the scaled particle decreased.

Hence, a simple cleaning work that was to supply tap water was able to eliminate only some adherent scales, and thus the catching performance gradually decreased. According to the Comparative Example 3-3, the catching performance of the adhering material was high, but the amount of adherent scales became excessive without a renewal work, and the catching performance gradually decreased.

As explained above, in the hot-water supply device 1 including the scale catcher 5, it is confirmed that when the scale catcher 5 is cleaned and renewed, the adsorbed scaled particles can be eliminated, and the catching performance of the scale adhering material 10 can be maintained for a long time.

In addition, it becomes clear that when the scale adhering material 10 has a sufficient aperture 13, and the energy necessary for nucleation of calcium carbonate on the surface of the scale adhering material 10 is sufficiently small, a further high performance can be maintained for a long time under a circumstance in which a larger amount of scaled particle is to be eliminated.

## Fourth Example

A fourth example relates to, like the third example, a test when the hot-water supply device 1 including the scale catcher 5 of the second embodiment and illustrated in FIG 6 was utilized. More specifically, it was tested how a renewal time changed which was necessary when the scale catcher 5 was periodically cleaned and renewed varied depending on the representative length L of the aperture 13 of the scale adhering material 10.

As to the test procedure, the test was carried out under the same operating condition as that of the above-explained third example, and the following scaled catchers in water were applied. Subsequently, respective renewal times were compared. In this case, the term renewal time is defined as a time necessary to decrease the amount of adherent scales before renewal to be 1/20 in ratio by weight.

As the scale adhering material 10, stainless mesh pieces of 315 g were filled in the scale catcher 5 (volume: 1.7 L). The mesh piece was a mesh formed of stainless steel lines with diameters of 200 $\mu$m and 50 $\mu$m, and the pitch R between the stainless steel lines was an equal interval which was 10 $\mu$m to 50 mm (see FIG 3A).

In addition, ones likewise formed of stainless steel, and having an aperture 13 in a shape of triangle, rectangle, circle, polygon, and star were also applied. In this case, the representative length L of the aperture 13 is defined as L = 4S/P where S is the area of the aperture 13 and P is the outer circumference.

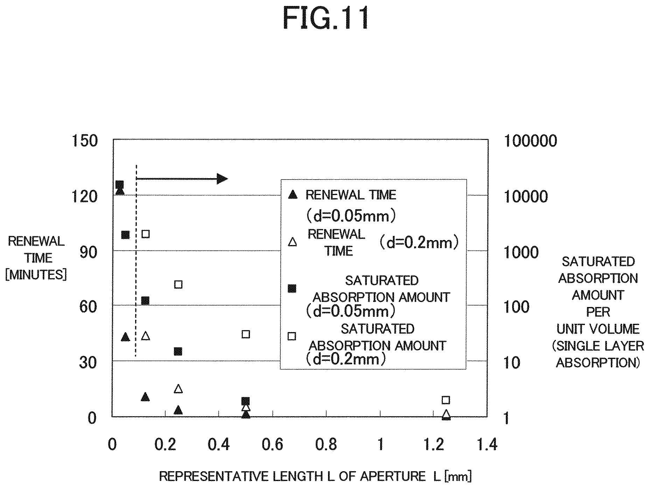

The scale adhering materials 10 with the aperture 13 formed in a triangle, rectangle, circle, polygonal or star-like shape had the representative length L of the aperture 13 set to be 10 $\mu$m to 50 mm. FIG 11 is a diagram illustrating a relationship between the representative length of the aperture and a renewal time according to the fourth example.

As illustrated in FIG 11, it becomes clear that the renewal times when the scale adhering material 10 employing various shapes can be sorted unambiguously based on the representative length L of the aperture 13. More specifically, the renewal time decreased like an exponential function together with an increase in the representative length L of the aperture 13.

When the particle diameter of the scaled particle grown together with heating was measured, it had a distribution within a range of 0.5 to 50 $\mu$m, and a distribution with a peak between 1 to 40 $\mu$m was obtained. In this case, it is desirable that the renewal time should be equal to or less than 45 minutes based on a practicality, and thus it becomes clear that the representative length L of the aperture 13 should be preferably equal to or greater than 100 $\mu$m (see a break indicated by an arrow in FIG 11).

When the representative length L of the aperture 13 increases, the surface area of the scale adhering material 10 per a unit volume decreases. Accordingly, the absolute amount of the scale adhering material 10 decreases. In this case it is desirable for a practical purpose that the representative length L of the aperture 13 should be set to be equal to or smaller than 20 mm.

Still further, as explained above, it is required that the pressure loss increase in a water circulating channel with the use of the scale catcher 5 should be normally equal to or smaller than 50 kPa at a flow rate of 20 L/Min, and it is desirable that the representative length L of the aperture 13 defined as L = 4S/P should be equal to or greater than 1 mm and equal to or smaller than 20 mm.

In addition, as explained above, when it is required to suppress the pressure loss increase in a water circulating channel with the use of the scale catcher 5 to be equal to or smaller than 20 kPa at a flow rate of 20 L/Min, it is desirable that the representative length L of the aperture 13 defined as L = 4S/P should be equal to or greater than 1 mm and equal to or smaller than 10 mm.

When the temperature of water supplied from the hot-water supply piping 17 is equal to or greater than 40 °C under a water quality condition such that the hardness of tap water is equal to or greater than 90 mg $CaCO_3$/L and equal to or smaller than 200 mg $CaCO_3$/L, and an M-alkaline level is equal to or greater than 50 mg $CaCO_3$/L and equal to or smaller than 100 mg $CaCO_3$/L, the amount of scales to be produced is relatively large. Accordingly, it is desirable that the representative length L of the aperture 13 should be set to be equal to or smaller than 15 mm.

When the temperature of water supplied from the hot-water supply piping 17 is equal to or greater than 40 °C under a water quality condition such that the hardness of tap water is equal to or greater than 200 mg $CaCO_3$/L, and an M-alkaline level is equal to or greater than 100 mg $CaCO_3$/L, the amount of scales to be produced further increases. Accordingly, it is desirable that the representative length L of the aperture 13 should be set to be equal to or smaller than 20 mm.

As explained above, in order to set the aperture 13 of the scale adhering material 10 in the scale catcher 5 subjected to renewal and elimination works in view of the practicality of the hot-water supply device 1, it is confirmed that the representative length L of the aperture 13 is most preferably set to be equal to or greater than 1 mm and equal to or smaller than 20 mm from the standpoint of the renewal time when in use. Still further, it becomes also apparent that the range of the representative length L of the aperture 13 is irrelevant to the shape of the aperture 13.

Fifth Example and Fifth Comparative Example

A fifth example relates to a test for a suppressing effect of adhered scales formed on the heat transfer surface in the heat exchanger 4 in the pipings of a hot-water circulating circuit when the hot-water supply device 1 according to the first embodiment illustrated in FIG 1 was utilized, and for a performance of the scale catcher 5, and more specifically, to a case in which the scale adhering material 10 was the aggregation of curled fibers.

Water with a hardness of 300 mg/L, pH of 7.8, a temperature of 20 °C, and a volume of 200 L was retained in the hot-water supply tank 3, and the water in the hot-water supply tank 3 was heated while being caused to circulate in a plate type water-water heat exchanger. The total heat transfer surface area of the heat exchanger 4 was 0.9 $m^2$.

Heated hot water was caused to circulate at the heat-medium circulating circuit side in the heat exchanger 4, and the water in the hot-water supply tank 3 was caused to circulate at the hot-water circulating circuit side in the heat exchanger 4 at a flow rate of 20 L/Min, and the water was heated to a temperature of 60 °C insubstantially one hour.

When the ratio of the circulated water quantity during the heating cycle relative to the volume of the hot-water supply tank 3 is defined as a circulation ratio, the circulation ratio was 6 (= 20 L/Min $\times$ 60 Min /200 L). Under such a condition, the amount of adherent scales formed on the heat transfer surface of the heat exchanger 4 at the hot-water circulating circuit side was compared when the following scale catchers were utilized in water.

In an Example 5-1, as the scale adhering material 10, stainless-steel-made curled fibers of 300 g were filled in the scale catcher 5 (volume: 1.7 L). The curling diameter $D_1$ was 5.0 mm, and the representative diameter $D_2$ of the fiber cross-section was 0.17 mm. In addition, the porosity of the scale adhering material 10 was 97.7 %.

In an Example 5-2, as the scale adhering material 10, stainless-steel-made curled fibers of 300 g were filled in the scale catcher 5 (volume: 1.7 L). The curling diameter $D_1$ was 2.6 mm, and the representative diameter $D_2$ of the fiber cross-section was 0.13 mm. In addition, the porosity of the scale adhering material 10 was 96.8 %.

In an Example 5-3, as the scale adhering material 10, stainless-steel-made curled fibers of 300 g were filled in the scale catcher 5 (volume: 1.7 L). The curling diameter $D_1$ was 1.0 mm, and the representative diameter $D_2$ of the fiber cross-section was 0.16 mm. In addition, the porosity of the scale adhering material 10 was 91.0 %.

In an Example 5-4, as the scale adhering material 10, stainless-steel-made curled fibers of 300 g were filled in the scale catcher 5 (volume: 1.7 L). The curling diameter $D_1$ was 8.5 mm, and the representative diameter $D_2$ of the fiber cross-section was 0.2 mm. In addition, the porosity of the scale adhering material 10 was 99.0 %.

In an Example 5-5, as the scale adhering material 10, stainless-steel-made curled fibers of 300 g were filled in the scale catcher 5 (volume: 1.7 L). The curling diameter $D_1$ was 20.0 mm, and the representative diameter $D_2$ of the fiber cross-section was 0.4 mm. In addition, the porosity of the scale adhering material 10 was 99.5 %.

In a Comparative Example 5-1, as the scale adhering material 10, stainless-steel-made curled fibers of 300 g were filled in the scale catcher 5 (volume: 1.7 L). The curling diameter $D_1$ was 0.5 mm, and the representative diameter $D_2$ of the fiber cross-section was 0.05 mm. In addition, the porosity of the scale adhering material 10 was 91.0 %.

In a Comparative Example 5-2, as the scale adhering material 10, stainless-steel-made curled fibers of 300 g were filled in the scale catcher 5 (volume: 1.7 L). The curling diameter $D_1$ was 25.0 mm, and the representative diameter $D_2$ of the fiber cross-section was 0.2 mm. In addition, the porosity of the scale adhering material 10 was 99.9 %.

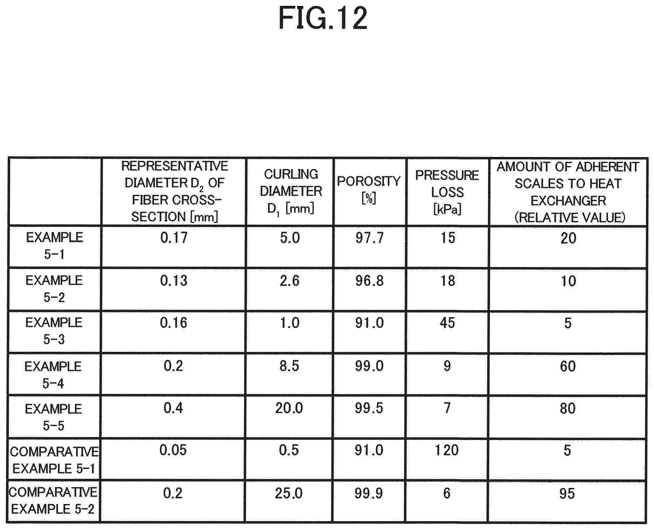

FIG 12 is a diagram illustrating the amounts of adherent scales to the heat exchanger in the fifth example and the fifth comparative example. More specifically, this figure illustrates the amount of adherent scales to the heat exchanger 4 at the hot-water circulating circuit side according to the Examples 5-1 to 5 and the Comparative Examples 5-1 and 2 under the above-explained condition when the hot-water supply device 1 was continuously operated for a month. Such amounts are indicated by relative values with the adhering amount when the scale catcher 5 was removed (the case of the above-explained Comparative Example 1-4) being as 100 %.

As illustrated in FIG 12, a high performance that was a reduction rate of equal to or greater than 80 % was accomplished according to the Examples 5-1 to 3, but the reduction rate was 5 % which was low according to the Comparative Example 5-2. The reduction rate was 20 to 40 % according to the Examples 5-4 and 5, but the amount of adherent scales to the heat exchanger was reduced by a nucleation catching effect.

According to the Comparative Example 5-1, the reduction rate was 95 % which was high, but the pressure loss increase originating from the use of the scale catcher was 120 kPa which was remarkably large. In general, the pressure loss increase in a water circulating channel with the use of the scale catcher 5 is equal to or smaller than 50 kPa at a flow rate of 20 L/Min, and thus it is desirable that the curling diameter $D_1$ should be equal to or greater than 1.0 mm.

Next, a relationship between the curling diameter of the scale adhering material 10, the porosity, and the amount of adherent scales to the heat exchanger will be studied. Together with the increase in the curling diameter $D_1$ (from 1 mm to 5 mm), the porosity was increased from 91 % to 97.7 %, and the reduction rate of the amount of adherent scales decreased from 95 % to 80 %. This is because the surface area of the scale adhering material 10 decreased together with the increase in the porosity.

As a result, it is desirable that, in view of practicality, the curling diameter $D_1$ should be equal to or greater than 1.0 mm and equal to or smaller than 20 mm. This corresponds to 91.0 % to 99.5 % when converted into the porosity of the scale adhering material 10.

When the outlet water temperature of the hot-water supply device is high that is equal to or higher than 80 °C, there is a possibility that the amount of scales to be produced relatively increases in comparison with a case in which the temperature is 60 °C, and thus it is desirable that the curling diameter $D_1$ should be equal to or greater than 1.0 mm and equal to or smaller than 8.5 mm. This corresponds to 91.0 % to 99.0 % when converted into the porosity of the scale adhering material.

A relationship between the curling diameter of the scale adhering material 10, the porosity, and the pressure loss inherent to the use of the scale catcher will be studied. Together with the increase in the curling diameter $D_1$ (from 1 mm to 5 mm), the pressure loss at a flow rate of 20 L/Min decreased from 45 kPa to 15 kPa. This is because the porosity increased from 91.0 to 97.7 % together with the increase in the curling diameter $D_1$.

As a result, it is required that the pressure loss increase in a water circulating channel with the use of the scale catcher 5 should be equal to or smaller than 50 kPa in normal at a flow rate of 20 L/Min, and thus it is desirable that the curling diameter $D_1$ should be equal to or greater than 1 mm and equal to or smaller than 20 mm.

In addition, when it is required to suppress the pressure loss increase in a water circulating channel with the use of the scale catcher 5 to be equal to or smaller than 20 kPa at a flow rate of 20 L/Min, it is desirable that the curling diameter $D_1$ should be equal to or greater than 2.0 mm and equal to or smaller than 20 mm.

Under the condition associated with the Examples 5-1 to 5, since the energy necessary for nucleation of calcium carbonate on the surface of the scale adhering material 10 was 0.8 to $1.0 \times 10^{-20}$ (J) which was sufficiently small, the nucleation on the surface of the scale adhering material 10 was advanced, and thus a larger amount of scaled particles were caught. In addition, since the curling diameter $D_1$ of the scale adhering material 10 was equal to or greater than 1 mm, scaled particles with a particle diameter of 1 to 40 $\mu$m did not cause the adhering material clogged.

It becomes clear that, under the condition associated with the Examples 5-1 to 5, in the hot-water supply device 1 including the scale catcher 5, when the scale adhering material 10 has a sufficient aperture (the curling diameter $D_1$ of the curled fibers forming the scale adhering material 10 >1 mm), and is formed of a base material that has the nucleation energy of calcium carbonate on the surface of the scale adhering material 10 which is equal to or smaller than $2.0 \times 10^{-20}$ (J), the scale adhering material becomes able to utilize the nucleation catching effect.

As a result, there are advantageous effects such that the scale adhering material 10 can have an excellent scale catching performance, and a reduction of the absorption performance of the adhering material due to clogging caused by the absorption of the scaled particles can be suppressed.

In addition, it is also confirmed that when not only the scaled particles with a large sedimentation characteristic but also fine scaled particles with a small sedimentation characteristic are efficiently eliminated from water, it becomes possible to suppress an adhesion of scales to the heat exchanger 4 of the hot-water supply device 1 for a long time.

List of Reference Signs

1 Hot-water supply device
2 Heat source
3 Hot-water supply tank

4 Heat exchanger
5 Scale catcher
6 Circulating pump
7 Flow channel open/close valve
8 Flow channel open/close valve
9 Scale-adhering-material holder/retainer
10 Scale adhering material
11 Scale-catcher inlet piping
12 Scale-catcher outlet piping
13 Aperture
14 Tap water piping
15 Circulation piping
16 Heat-exchanger inlet piping
17 Hot-water supply piping
18 Scale reservoir
19 Tap water supply piping
20 Scale drain piping
21 Flow channel open/close valve
22 Flow channel open/close valve

**Claims**

**1.** A hot-water supply device (1) comprising:

- a heat exchanger (4) that is adapted to perform heat exchange;
- a hot-water supply tank (3);
- a delivery piping that is adapted to deliver hot water from the hot-water supply tank (3) to the heat exchanger (4);
- a return piping that is adapted to feed the hot water from the heat exchanger (4) to the hot-water supply tank (3); and
- a scale catcher (5) that is disposed to catch a scale whose particle diameter is in a range from 0.5 μm to 50 μm in the return piping,

wherein the scale catcher (5) comprises a scale adhering material (10) filled in a scale-adhering-material holder/retainer (9),
wherein the scale adhering material (10) is formed of an aggregation of curled fibers tangled irregularly,
wherein a curling diameter $D_1$ of the curled fibers is equal to or greater than 1.0 mm and equal to or smaller than 20 mm when the outlet temperature of the hot-water supply device is lower than 80°C, and a curling diameter D1 of the curled fibers is equal to or greater than 1.0 mm and equal to or smaller than 8.5 mm when the outlet temperature of the hot-water supply device is higher than or equal to 80° C, and
wherein the scale adhering material is formed of a material that is any one of copper, brass, stainless steel, a silicon rubber, glass, iron, oxidized iron (III, II), polyvinyl chloride, polyethylene, polystyrene, polypropylene, an isoprenoid rubber, a butadiene rubber, or a styrene-butadiene rubber, and
wherein the scale adhering material is formed of a material that has nucleation energy of scales of calcium carbonate on a surface of the material, the nucleation energy being equal to or smaller than 2.0 x $10^{-20}$J.

**2.** A hot-water supply device (1) comprising:

- a heat exchanger (4) that is adapted to perform heat exchange;
- a hot-water supply tank (3);
- a delivery piping that is adapted to deliver hot water from the hot-water supply tank (3) to the heat exchanger (4);
- a return piping that is adapted to feed the hot water from the heat exchanger (4) to the hot-water supply tank (3); and
- a scale catcher (5) that is disposed to catch a scale whose particle diameter is in a range from 0.5 μm to 50 μm in a channel of the hot water including the hot-water supply tank (3), the delivery piping, the heat exchanger (4), and/or the return piping,

wherein the scale catcher (5) comprises a scale adhering material (10) filled in a scale-adhering-material holder/retainer (9),
wherein the scale adhering material (10) is formed of an aggregation of curled fibers tangled irregularly,
wherein a curling diameter $D_1$ of the curled fibers is equal to or greater than 1.0 mm and equal to or smaller than 20 mm when the outlet temperature of the hot-water supply device is lower than 80°C, and a curling diameter D1 of the curled fibers is equal to or greater than 1.0 mm and equal to or smaller than 8.5 mm when the outlet temperature of the hot-water supply device is higher than or equal to 80°C,
wherein, in the scale-adhering-material holder/retainer (9), a scale-catcher inlet piping (11) is connected with a lower portion of the scale-adhering-material holder/retainer (9), and a scale-catcher outlet piping (12) is connected with an upper portion of the scale-adhering-material holder/retainer (9), and
wherein the scale adhering material is formed of a material that is any one of copper, brass, stainless steel, a silicon rubber, glass, iron, oxidized iron (III, II), polyvinyl chloride, polyethylene, polystyrene, polypropylene, an isoprenoid rubber, a butadiene rubber, or a styrene-butadiene rubber, and
wherein the scale adhering material is formed of a material that has nucleation energy of scales of calcium carbonate on a surface of the material, the nucleation energy being equal to or smaller than 2.0 x $10^{-20}$J.

**3.** The hot-water supply device (1) according to claim 1 or 2, wherein the scale adhering material (10) is formed of a material that is any one of copper, brass, a silicon rubber, glass, iron, oxidized iron (III, II), polyvinyl chloride, polyethylene, polystyrene, polypropylene, an isoprenoid rubber, a butadiene rubber, or a styrene-butadiene rubber.

4. The hot-water supply device (1) according to any one of claims 1 to 3, wherein an apparent porosity of the scale adhering material (10) is equal to or greater than 91.0 % and equal to or smaller than 99.0 %.

## Patentansprüche

1. Warmwasserversorgungseinrichtung, welche Folgendes aufweist:

   - einen Wärmetauscher (4), welcher dazu geeignet ist, einen Wärmetausch durchzuführen;
   - einen Warmwasserversorgungstank (3);
   - eine Zuleitung, welche dazu geeignet ist, dem Warmwasserversorgungstank (3) warmes Wasser aus dem Wärmetauscher (4) zuzuführen; und
   - einen Kesselsteinfänger (5), welcher so angeordnet ist, dass er einen Kesselstein, dessen Partikeldurchmesser in einem Bereich zwischen 0,5 μm und 50 μm liegt, in der Rückleitung auffängt, wobei der Kesselsteinfänger (5) ein Material (10) aufweist, das Kesselstein an sich bindet und in einem Halter/einer Haltevorrichtung (9) für Kesselstein bindendes Material abgefüllt ist,

   wobei das Kesselstein bindende Material (10) aus einer Ansammlung gekräuselter, ungleichmäßig verschlungener Fasern ausgestaltet ist,
   wobei ein Kräuseldurchmesser $D_1$ der gekräuselten Fasern gleich oder größer 1,0 mm und gleich oder kleiner 20 mm ist, wenn die Austrittstemperatur der Warmwasserversorgungseinrichtung unter 80°C liegt, und ein Kräuseldurchmesser D1 der gekräuselten Fasern gleich oder größer 1,0 mm und gleich oder kleiner 8,5 mm ist, wenn die Austrittstemperatur der Warmwasserversorgungseinrichtung höher oder gleich 80°C ist, und
   wobei das Kesselstein bindende Material aus einem Material ausgestaltet ist, das entweder Kupfer, Messing, Edelstahl, ein Silikon-Kautschuk, Glas, Eisen, oxidiertes Eisen (III,II), Polyvinylchlorid, Polyethylen, Polystyrol, Polypropylen, ein Isoprenoid-Kautschuk, ein Butadien-Kautschuk oder ein Styrol-Butadien-Kautschuk ist, und wobei das Kesselstein bindende Material auf einer Oberfläche des Materials eine Nukleierungsenergie von Kalziumkarbonat-Kesselstein aufweist, wobei die Nukleierungsenergie gleich oder kleiner $2{,}0 \times 10^{-20}$J ist.

2. Warmwasserversorgungseinrichtung (1), welche Folgendes aufweist:

   - einen Wärmetauscher (4), welcher dazu geeignet ist, einen Wärmetausch durchzuführen;
   - einen Warmwasserversorgungstank (3);
   - eine Zuleitung, welche dazu geeignet ist, dem Wärmetauscher (4) warmes Wasser aus dem Warmwasserversorgungstank (3) zuzuführen;
   - eine Rückleitung, welche dazu geeignet ist, den Warmwasserversorgungstank (3) mit dem warmen Wasser aus dem Wärmetauscher (4) zu speisen; und
   - einen Kesselsteinfänger (5), welcher so angeordnet ist, dass er einen Kesselstein, dessen Partikeldurchmesser in einem Bereich zwischen 0,5 μm und 50 μm liegt, in einem Kanal des warmen Wassers einschließlich des Warmwasserversorgungstanks (3), der Zuleitung, des Wärmetauschers (4) und/oder der Rückleitung auffängt,

   wobei der Kesselsteinfänger (5) ein Kesselstein bindendes Material (10) aufweist, dass in einem Halter/einer Haltevorrichtung (9) für Kesselstein bindendes Material abgefüllt ist,
   wobei das Kesselstein bindende Material (10) aus einer Ansammlung gekräuselter, ungleichmäßig verschlungener Fasern ausgestaltet ist;
   wobei ein Kräuseldurchmesser $D_1$ der gekräuselten Fasern gleich oder größer 1,0 mm und gleich oder kleiner 20 mm ist, wenn die Austrittstemperatur der Warmwasserversorgungseinrichtung unter 80°C liegt, und ein Kräuseldurchmesser D1 der gekräuselten Fasern gleich oder größer 1,0 mm und gleich oder kleiner 8,5 mm ist, wenn die Austrittstemperatur des Warmwasserversorgungsgeräts höher oder gleich 80°C ist,
   wobei im Halter/in der Haltevorrichtung (9) für das Kesselstein bindende Material eine Kesselsteinfänger-Eintrittsleitung (11) mit einem unteren Abschnitt des Halters/der Haltevorrichtung (9) für das Kesselstein bindende Material verbunden ist, und eine Kesselsteinfänger-Austrittsleitung (12) mit einem oberen Abschnitt des Halters/der Haltevorrichtung (9) für das Kesselstein bindende Material verbunden ist, und
   wobei das Kesselstein bindende Material aus einem Material ausgestaltet ist, das entweder Kupfer, Messing, Edelstahl, ein Silikon-Kautschuk, Glas, Eisen, oxidiertes Eisen (III, II), Polyvinylchlorid, Polyethylen, Polystyrol, Polypropylen, ein Isoprenoid-Kautschuk, ein Butadien-Kautschuk oder ein Styrol-Butadien-Kautschuk ist, und
   wobei das Kesselstein bindende Material aus einem Material ausgestaltet ist, welches auf einer Oberfläche des Materials eine Nukleierungsenergie von Kalziumkarbonat-Kesselstein aufweist, wobei die Nukleierungsenergie gleich oder kleiner $2{,}0 \times 10^{-20}$J

ist.

3. Warmwasserversorgungseinrichtung (1) gemäß Anspruch 1 oder 2, wobei das Kesselstein bindende Material (10) aus einem Material ausgestaltet ist, das entweder Kupfer, Messing, ein Silikon-Kautschuk, Glas, Eisen, oxidiertes Eisen (III, II), Polyvinylchlorid, Polyethylen, Polystyrol, Polypropylen, ein Isoprenoid-Kautschuk, ein Butadien-Kautschuk oder ein Styrol-Butadien-Kautschuk ist.

4. Warmwasserversorgungseinrichtung (1) gemäß einem der Ansprüche 1 bis 3, wobei eine erkennbare Porosität des Materials (10), das den Kesselstein bindet, gleich oder größer 91,0% und gleich oder kleiner 99,0% ist.

**Revendications**

1. Dispositif d'approvisionnement en eau chaude (1) comprenant :

   - un échangeur de chaleur (4) qui est adapté pour effectuer un échange de chaleur ;
   - un réservoir d'approvisionnement en eau chaude (3) ;
   - une tubulure de distribution qui est adaptée pour distribuer de l'eau chaude depuis le réservoir d'approvisionnement en eau chaude (3) jusqu'à l'échangeur de chaleur (4) ;
   - une tubulure de retour qui est adaptée pour alimenter l'eau chaude depuis l'échangeur de chaleur (4) jusqu'au réservoir d'approvisionnement en eau chaude (3) ; et
   - un capteur de tartre (5) qui est disposé pour capter du tartre dont le diamètre particulaire est dans une plage allant de 0,5 μm à 50 μm dans la tubulure de retour,

   dans lequel le capteur de tartre (5) comprend un matériau d'adhérence de tartre (10) rempli dans un support/conteneur (9) de matériau d'adhérence de tartre,
   dans lequel le matériau d'adhérence de tartre (10) est constitué d'une agrégation de fibres bouclées enchevêtrées irrégulièrement,
   dans lequel un diamètre de bouclage $D_1$ des fibres bouclées est égal ou supérieur à 1,0 mm et égal ou inférieur à 20 mm quand la température de sortie du dispositif d'approvisionnement en eau chaude est inférieure à 80 °C, et un diamètre de bouclage D1 des fibres bouclées est égal ou supérieur à 1,0 mm et égal ou inférieur à 8,5 mm quand la température de sortie du dispositif d'approvisionnement en eau chaude est supérieure ou égale à 80 °C, et
   dans lequel le matériau d'adhérence de tartre est constitué d'un matériau qui est un matériau quelconque parmi cuivre, laiton, acier inoxydable, caoutchouc siliconé, verre, fer, fer oxydé (III, II), chlorure de polyvinyle, polyéthylène, polystyrène, polypropylène, caoutchouc isoprène, caoutchouc butadiène ou caoutchouc styrène-butadiène, et
   dans lequel le matériau d'adhérence de tartre est constitué d'un matériau qui a une énergie de nucléation de tartre de carbonate de calcium sur une surface du matériau, l'énergie de nucléation étant égale ou inférieure à 2,0 x $10^{-20}$J.

2. Dispositif d'approvisionnement en eau chaude (1) comprenant :

   - un échangeur de chaleur (4) qui est adapté pour effectuer un échange de chaleur ;
   - un réservoir d'approvisionnement en eau chaude (3) ;
   - une tubulure de distribution qui est adaptée pour distribuer de l'eau chaude depuis le réservoir d'approvisionnement en eau chaude (3) jusqu'à l'échangeur de chaleur (4) ;
   - une tubulure de retour qui est adaptée pour alimenter l'eau chaude depuis l'échangeur de chaleur (4) jusqu'au réservoir d'approvisionnement en eau chaude (3) ; et
   - un capteur de tarte (5) qui est disposé pour capter du tarte dont le diamètre particulaire est dans une plage allant de 0,5 □m à 50 □m dans un canal de l'eau chaude incluant le réservoir d'approvisionnement en eau chaude (3), la tubulure de distribution, l'échangeur de chaleur (4), et/ou la tubulure de retour,

   dans lequel le capteur de tarte (5) comprend un matériau d'adhérence de tarte (10) rempli dans un support/conteneur (9) de matériau d'adhérence de tarte,
   dans lequel le matériau d'adhérence de tarte (10) est constitué d'une agrégation de fibres bouclées enchevêtrées irrégulièrement,
   dans lequel un diamètre de bouclage $D_1$ des fibres bouclées est égal ou supérieur à 1,0 mm et égal ou inférieur à 20 mm quand la température de sortie du dispositif d'approvisionnement en eau chaude est inférieure à 80 °C, et un diamètre de bouclage D1 des fibres bouclées est égal ou supérieur à 1,0 mm et égal ou inférieur à 8,5 mm quand la température de sortie du dispositif d'approvisionnement en eau chaude est supérieure ou égale à 80 °C,
   dans lequel, dans le support/conteneur (9) de matériau d'adhérence de tarte, une tubulure d'entrée (11) de capteur de tarte est connectée à une portion inférieure du support/conteneur (9) de matériau d'adhérence de tarte, et une tubulure de sortie (12) de capteur de tarte est connectée à une portion supérieure du support/conteneur (9) de matériau d'adhérence de tarte, et
   dans lequel le matériau d'adhérence de tarte est constitué d'un matériau qui est un matériau quelconque parmi cuivre, laiton, acier inoxydable, caoutchouc siliconé, verre, fer, fer oxydé (III, II), chlorure de polyvinyle, polyéthylène, polystyrène, polypropylène, caoutchouc isoprène, caoutchouc butadiène ou caoutchouc styrène-butadiène, et dans lequel le matériau d'adhérence de tarte est constitué d'un matériau qui a une énergie de nucléation de tarte de carbonate de calcium sur une surface du matériau, l'énergie de nucléation étant égale ou inférieure à 2,0 x $10^{-20}$J.

**3.** Dispositif d'approvisionnement en eau chaude (1) selon la revendication 1 ou 2, dans lequel le matériau d'adhérence de tartre (10) est constitué d'un matériau qui est un matériau quelconque parmi cuivre, laiton, acier inoxydable, caoutchouc siliconé, verre, fer, fer oxydé (III, II), chlorure de polyvinyle, polyéthylène, polystyrène, polypropylène, caoutchouc isoprène, caoutchouc butadiène ou caoutchouc styrène-butadiène.

**4.** Dispositif d'approvisionnement en eau chaude (1) selon l'une quelconque des revendications 1 à 3, dans lequel une porosité apparente du matériau d'adhérence de tarte (10) est égale ou supérieure à 91,0 % et est égale ou inférieure à 99,0 %.

1
2
3
4
5
6
7
8
10
11
12
14
15
15
16
17

FIG.1

FIG.2

8
12
5
9
10
11
7

FIG.3A

13
R
R

FIG.3B

13
R1
R2

FIG.3C

R
13

FIG.3D

$R_1$
$R_2$
13

FIG.4A

FIBER DIAMETER
D 2
CURLING
DIAMETER D1

FIG.4B

W1

FIG.4C

X-AXIS
$W_2$

FIG.4D

X-AXIS
HEIGHT H

# FIG.5

| MATERIAL | FREE ENERGY CHANGE [J] |
|---|---|
| COPPER | $0.5 \sim 1.0 \times 10^{-20}$ |
| BRASS | $0.3 \sim 0.5 \times 10^{-20}$ |
| SILICON RUBBER | $0.5 \sim 0.8 \times 10^{-20}$ |
| GLASS | $0.8 \sim 1.5 \times 10^{-20}$ |
| IRON | $0.9 \sim 1.1 \times 10^{-20}$ |
| OXIDIZED IRON (III,II) | $1.0 \sim 1.2 \times 10^{-20}$ |
| TEFLON RESIN (PTFE, PFA) | $4.5 \sim 5.0 \times 10^{-20}$ |
| POLYVINYL CHLORIDE, POLYETHYLENE, POLYSTYRENE, POLYPROPYLENE, POLYSULFONATE | $1.3 \sim 2.0 \times 10^{-20}$ |
| ISOPRENOID RUBBER, BUTADIENE RUBBER, STYRENE-BUTADIENE RUBBER | $1.5 \sim 1.9 \times 10^{-20}$ |
| NYLON-6, NYLON-6-6 | $3 \sim 3.5 \times 10^{-20}$ |

# FIG.6

19
21
8
12
9
10
5
11
7
18
22
20

FIG.7

AMOUNT OF ADHERENT SCALES TO HEAT EXCHANGER (RELATIVE VALUE)
120
100
80
60
40
20
0
100
10
45
35
91
NO ADHERING MATERIAL (COMPARATIVE EXAMPLE 1-4)
FIRST EXAMPLE
COMPARATIVE EXAMPLE 1-1
COMPARATIVE EXAMPLE 1-2
COMPARATIVE EXAMPLE 1-3

# FIG.8A

SCALED PARTICLES
SCALE NUCLEI
d
L
(SCALE) ADHERING MATERIAL

FIRST EXAMPLE

# FIG.8B

COMPARATIVE EXAMPLE 1-1

FIG.8C

d
L

COMPARATIVE EXAMPLE 1-2

FIG.9

70
60
50
40
30
20
10
0
ABSORPTION AMOUNT AFTER SIX-MONTH OPERATING TIME [g/g]
0
2
4
6
NUCLEATION ENERGY [×10-20J]

FIG.10

THIRD EXAMPLE
COMPARATIVE EXAMPLE 3-1
COMPARATIVE EXAMPLE 3-2
COMPARATIVE EXAMPLE 3-3
AMOUNT OF ADHERENT SCALES TO HEAT EXCHANGER (RELATIVE VALUE)
120
100
80
60
40
20
0
0
5
10
15
OPERATING CYCLE (MONTHS)

# FIG.11

150
120
90
60
30
0
RENEWAL
TIME
[MINUTES]
100000
10000
1000
100
10
1
SATURATED
ABSORPTION
AMOUNT
PER
UNIT VOLUME
(SINGLE LAYER
ABSORPTION)
RENEWAL TIME
(d=0.05mm)
RENEWAL
TIME
(d=0.2mm)
SATURATED
ABSORPTION AMOUNT
(d=0.05mm)
SATURATED
ABSORPTION AMOUNT
(d=0.2mm)
0
0.2
0.4
0.6
0.8
1
1.2
1.4
REPRESENTATIVE LENGTH L OF APERTURE L [mm]

# FIG.12

| | REPRESENTATIVE DIAMETER $D_2$ OF FIBER CROSS-SECTION [mm] | CURLING DIAMETER $D_1$ [mm] | POROSITY [%] | PRESSURE LOSS [kPa] | AMOUNT OF ADHERENT SCALES TO HEAT EXCHANGER (RELATIVE VALUE) |
|---|---|---|---|---|---|
| EXAMPLE 5-1 | 0.17 | 5.0 | 97.7 | 15 | 20 |
| EXAMPLE 5-2 | 0.13 | 2.6 | 96.8 | 18 | 10 |
| EXAMPLE 5-3 | 0.16 | 1.0 | 91.0 | 45 | 5 |
| EXAMPLE 5-4 | 0.2 | 8.5 | 99.0 | 9 | 60 |
| EXAMPLE 5-5 | 0.4 | 20.0 | 99.5 | 7 | 80 |
| COMPARATIVE EXAMPLE 5-1 | 0.05 | 0.5 | 91.0 | 120 | 5 |
| COMPARATIVE EXAMPLE 5-2 | 0.2 | 25.0 | 99.9 | 6 | 95 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003117589 A
- JP 2011058733 A
- JP 2001129593 A
- EP 1484289 A1
- JP H05245497 A
- JP 2005279406 A